# EUROPEAN PATENT APPLICATION

(11) **EP 4 604 216 A1**
(43) Date of publication of application: **20.08.2025**
(21) Application number: 24777479.7
(22) Date of filing: 25.01.2024
(51) Int. Cl.: H01M 4/58, C01B 25/41

(54) **COMPOSITE POSITIVE ELECTRODE ACTIVE MATERIAL, BATTERY CELL, BATTERY AND ELECTRIC DEVICE**

(30) Priority: 24.03.2023 CN 202310300449
(71) Applicant: Contemporary Amperex Technology (Hong Kong) Limited, Hong Kong (HK)
(72) Inventor: LIU, Shaojun, Ningde, Fujian 352100 (CN); ZHAN, Wenwei, Ningde, Fujian 352100 (CN); ZHANG, Xinxin, Ningde, Fujian 352100 (CN); OUYANG, Chuying, Ningde, Fujian 352100 (CN)
(74) Representative: Jacob, Reuben Ellis
(86) International application number: PCT/CN2024/073989
(87) International publication number: WO 2024/198684

(57) **Abstract**

Provided in the embodiments of the present invention are a composite positive electrode active material, a battery cell, a battery and an electric device. The composite positive electrode active material comprises a first lithium ferromanganese phosphate material and a second lithium ferromanganese phosphate material, wherein the first lithium ferromanganese phosphate material has a nanosheet structure, and the area of the (010) crystal plane of the first lithium ferromanganese phosphate material accounts for A1% of the total area of the crystal planes of the first lithium ferromanganese phosphate material; the second lithium ferromanganese phosphate material has a spherical and/or quasi-spherical structure, and the area of the (010) crystal plane of the second lithium ferromanganese phosphate material accounts for A2% of the total area of the crystal planes of the second lithium ferromanganese phosphate material; and the composite positive electrode active material satisfies: A1>A2.

## Description

### CROSS-REFERENCE TO RELATED APPLICATIONS

The present application claims priority to the Chinese Patent Application No. 202310300449.9 filed on March 24, 2023 and entitled "COMPOSITE POSITIVE ELECTRODE ACTIVE MATERIAL, BATTERY CELL, BATTERY, AND ELECTRICAL APPARATUS," the entire content of which is incorporated herein by reference.

### TECHNICAL FIELD

The present application relates to the field of batteries, and in particular, to a composite positive electrode active material, a battery cell, a battery, and an electrical apparatus.

### BACKGROUND

Because of the characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

However, as the application range of batteries becomes more and more extensive, the requirements on the performances of the batteries are becoming increasingly stringent. However, in the related art, when the battery cell is in use, the voltage drop of the positive electrode active material is too large, which is not conducive to improving the energy density of the battery cell.

### SUMMARY OF THE INVENTION

The present application is conducted in view of the above problems, and aims to provide a composite positive electrode active material, a battery cell, a battery, and an electrical apparatus.

A first aspect of the present application provides a composite positive electrode active material, including afirst lithium iron manganese phosphate type material and a second lithium iron manganese phosphate type material. The first lithium iron manganese phosphate type material has a nanosheet structure, and a ratio of an area of a (010) crystal plane of the first lithium iron manganese phosphate type material to a total area of crystal planes of the first lithium iron manganese phosphate type material is A₁%. The second lithium iron manganese phosphate type material has a spherical and/or quasi-spherical structure, and a ratio of an area of a (010) crystal plane of the second lithium iron manganese phosphate type material to a total area of crystal planes of the second lithium iron manganese phosphate type material is A₂%. The composite positive electrode active material satisfies: A₁>A₂.

Therefore, the nanosheet structure of the first lithium iron manganese phosphate type material in the embodiment of the present application makes the area of the (010) crystal plane of the first lithium iron manganese phosphate type material larger, and a capacity thereof is close to a theoretical capacity; and after the first lithium iron manganese phosphate type material and the second lithium iron manganese phosphate type material are mixed to form the composite positive electrode active material, an overall capacity of the composite positive electrode active material is improved, and an average discharge voltage is improved, so that when the composite positive electrode active material is used in a battery cell, an energy density of the battery cell is significantly improved.

In some embodiments, a lattice parameter b-axis length of the first lithium iron manganese phosphate type material is b₁, with a unit of nm; and a lattice parameter b-axis length of the second lithium iron manganese phosphate type material is b₂, with a unit of nm, where b₁<b₂.

Therefore, a lattice parameter b-axis of the first lithium iron manganese phosphate type material in the embodiment of the present application is relatively short, which can further shorten a lithium ion diffusion distance, thereby facilitating rapid transmission of lithium ions, and improving a rate performance of the battery cell.

In some embodiments, b₁<100; and further optionally, 10≤b₁≤80.

In some embodiments, b₂>100; and further optionally, 200≤b₂≤800.

In some embodiments, an average voltage of the composite positive electrode active material is 3.55 V to 3.81 V.

In some embodiments, the composite positive electrode active material has a first discharge voltage plateau U1 and a second discharge voltage plateau U2, and 4.0V≤U1<4.1V; and/or 3.4V≤U2≤3.6V.

Therefore, the second lithium iron manganese phosphate type material in the embodiment of the present application has two voltage plateaus, namely a manganese plateau of 4.1 V and an iron plateau of 3.5 V, due to addition of a manganese element, and has a relatively high voltage plateau compared to materials such as lithium iron phosphate; due to mixed use of the first lithium iron manganese phosphate type material and the second lithium iron manganese phosphate type material, the composite positive electrode active material has a significant voltage increase, which can significantly improve an energy density of the composite positive electrode active material.

In some embodiments, a powder resistivity of the composite positive electrode active material is 1Ω·cm to 500 Ω·cm.

In some embodiments, a powder compaction density of the composite positive electrode active material is 2.19 g/ml to 2.40 g/ml.

In some embodiments, an X-ray diffraction (XRD) pattern of the first lithium iron manganese phosphate type material has a characteristic peak I (020) and a characteristic peak I (200), and I (020)/I (200)>2.1.

In some embodiments, an XRD pattern of the second lithium iron manganese phosphate type material has a characteristic peak I (020) and a characteristic peak I (200), and I (020)/I (200)≤2.1.

In some embodiments, a thickness of the first lithium iron manganese phosphate type material is H, with a unit of nm, and 10≤H≤80. When the thickness of the first lithium iron manganese phosphate type material is within the above range, it is beneficial for the first lithium iron manganese phosphate type material to be distributed between gaps between particles of the second lithium iron manganese phosphate type material to form a conductive network structure, which can improve of the composite positive electrode active material and reduce the intrinsic resistance of the composite positive electrode active material, thereby improving powder conductivity.

In some embodiments, based on a total mass of the composite positive electrode active material, a mass percentage of the first lithium iron manganese phosphate type material is B₁, and a mass percentage of the second lithium iron manganese phosphate type material is B₂, where 1≤B₂/B₁≤19.

When the mass percentages of the first lithium iron manganese phosphate type material and the second lithium iron manganese phosphate type material satisfy the above range, the discharge voltage plateau of the composite positive electrode active material can be significantly improved, thereby improving the energy density of the battery cell.

In some embodiments, a volumetric average particle size of the first lithium iron manganese phosphate type material is Dᵥ₅₀₋₁, with a unit of nm; a volumetric average particle size of the second lithium iron manganese phosphate type material is Dᵥ₅₀₋₂, with a unit of nm, where 1≤Dᵥ₅₀₋₂/Dᵥ₅₀₋₁≤16; and optionally, 2≤Dᵥ₅₀₋₂/Dᵥ₅₀₋₁≤16.

Therefore, the embodiment of the present application prepares the composite material by mixing two lithium iron manganese phosphate particles of different particle sizes, and improves a bulk density between the particles through a grading relationship between the particles, so that the composite material has a relatively high compaction density, and the energy density of the battery cell can also be improved.

In some embodiments, 50≤Dᵥ₅₀₋₁≤300; and/or 200≤Dᵥ₅₀₋₂≤800.

In some embodiments, a specific surface area of the first lithium iron manganese phosphate type material is S₁, with a unit ofm²/g; and a specific surface area of the second lithium iron manganese phosphate type material is S₂, with a unit ofm²/g; where 0.4≤S₂/S₁<1.0.

Therefore, when the specific surface area of the first lithium iron manganese phosphate type material and the specific surface area of the second lithium iron manganese phosphate type material in the embodiment of the present application are within the above ranges, it is more conducive for the first lithium iron manganese phosphate type material to form an interconnected conductive network structure, thereby improving electronic powder conductivity of the composite positive electrode active material.

In some embodiments, 20≤S₁≤50; and/or 8≤S₂≤20.

In some embodiments, the first lithium iron manganese phosphate type material and the second lithium iron manganese phosphate type material each independently include a compound having a molecular formula of LiFe₍₁₋ₓ₎MnₓPO₄ and a modified compound thereof, where 0.5≤x<1.

A second aspect of the present application further provides a battery cell, including a positive electrode plate, where the positive electrode plate includes a composite positive electrode active material according to any embodiment of the first aspect of the present application.

A third aspect of the present application further provides a battery, including a battery cell according to any embodiment of the second aspect of the present application.

A fourth aspect of the present application further provides an electrical apparatus, including the battery according to any embodiment of the third aspect of the present embodiment.

### BRIEF DESCRIPTION OF THE DRAWINGS

In order to illustrate the technical solutions of the embodiments of the present application more clearly, the drawings required in the embodiments of the present application will be briefly introduced below. Obviously, the drawings described below are only some embodiments of the present application. For those of ordinary skill in the art, other drawings can also be obtained according to the drawings without any creative effort.
FIG. 1 is a schematic view of an embodiment of a battery cell of the present application;
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic view of an embodiment of an electrical apparatus including the battery cell of the present application as a power source;
FIG. 7a is a scanning electron microscope (SEM) image of a first lithium iron manganese phosphate type material of a composite positive electrode active material in Embodiment 1;
FIG. 7b is an SEM image of a second lithium iron manganese phosphate type material of the composite positive electrode active material in Embodiment 1;
FIG. 8 is a transmission electron microscope (TEM) image of the composite positive electrode active material in Embodiment 1;
FIG. 9 is an SEM image of the composite positive electrode active material in Embodiment 1; and
FIG. 10 is a charging and discharging curve graph of the composite positive electrode active material in Embodiment 1 and a composite positive electrode active material in Comparative Example 1.

The accompanying drawings may not be drawn according to the actual scale.

Description of reference numerals:
1, Battery pack; 2, Upper box body; 3, Lower box body; 4, Battery module;
5, Battery cell; 51, Housing; 52, Electrode assembly;
53, Cover plate;
6, Electrical apparatus.

### DETAILED DESCRIPTION

Hereinafter, embodiments specifically disclosing a composite positive electrode active material, a battery cell, a battery, and an electrical apparatus of the present application are described in detail. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or more.

Polyanionic compounds are a series of compounds containing tetrahedral or octahedral anion structural units. A crystal framework structure of this type of compound is stable and can still maintain a stable structure even if a large number of lithium ions are deintercalated. For example, when the lithium ions are deintercalated in a positive electrode material, structural rearrangement of the material is very small. In addition, a discharge potential plateau of the material can be modulated by configuring different chemical elements.

The polyanionic compounds include lithium iron phosphate, lithium manganese phosphate, lithium iron manganese phosphate, etc., where the lithium iron manganese phosphate combines excellent properties of the lithium iron phosphate and the lithium manganese phosphate, has stable chemical properties and a high safety performance; and a crystal structure thereof is an orthogonal olivine crystal structure, so that the material has good thermal stability and low oxidizability. In order to improve the performances of the material, in the related arts, materials of different particle sizes are compounded, and even the polyanionic compounds and ternary materials are compounded for use. However, although the above method can make the best of strengths to offset weaknesses and improve physical parameters of the material, it has little improvement on electrochemical and intrinsic properties of the material, and a voltage drop of the lithium iron manganese phosphate is still too large, resulting in a small energy density of a battery cell when it is applied to the battery cell.

In view of the above problems, an embodiment of the present application proposes a composite positive electrode active material, the composite positive electrode active material includes two types of mixed lithium iron manganese phosphate materials, especially one of the lithium iron manganese phosphate materials is a material with a (010) crystal plane exposed, and a capacity of this type of material is close to a theoretical capacity, which can significantly improve an average discharge voltage of lithium iron manganese phosphate, thereby improving the energy density of the battery cell.

### Composite positive electrode active material

In the first aspect, the present application proposes a composite positive electrode active material, and the composite positive electrode active material includes a first lithium iron manganese phosphate type material and a second lithium iron manganese phosphate type material. The first lithium iron manganese phosphate type material has a nanosheet structure, and a ratio of an area of a (010) crystal plane of the first lithium iron manganese phosphate type material to a total area of crystal planes of the first lithium iron manganese phosphate type material is A₁%. The second lithium iron manganese phosphate type material has a spherical and/or quasi-spherical structure, and a ratio of an area of a (010) crystal plane of the second lithium iron manganese phosphate type material to a total area of crystal planes of the second lithium iron manganese phosphate type material is A₂%. The composite positive electrode active material satisfies: A₁>A₂.

The second lithium iron manganese phosphate type material is a spherical and/or quasi-spherical material, which can be secondary particles formed by agglomerating primary particles, or primary particles, or a mixed material of primary particles and secondary particles.

The first lithium iron manganese phosphate type material has the nanosheet structure, which can be understood as a material whose thickness is much smaller than a length or width thereof, and can be one or more of triangular sheet shapes, square sheet shapes, and hexagonal sheet shapes. Since the first lithium iron manganese phosphate type material has the nanosheet structure, the area of the (010) crystal plane of the first lithium iron manganese phosphate type material is large, and a capacity thereof is close to a theoretical capacity. After the first lithium iron manganese phosphate type material and the second lithium iron manganese phosphate type material are mixed to form the composite positive electrode active material, an overall capacity of the composite positive electrode active material is improved, and an average discharge voltage is improved, so that when the composite positive electrode active material is used in a battery cell, an energy density of the battery cell is significantly improved.

In some embodiments, 40≤A₁≤80. Optionally, 40≤A₁≤74. Exemplarily, the ratio of the area of the (010) crystal plane of the first lithium iron manganese phosphate type material to the total area of the crystal planes of the first lithium iron manganese phosphate type material may be 40%, 42%, 45%, 48%, 50%, 52%, 55%, 58%, 60%, 65%, 70%, 74%, 75%, 80%, or a range consisting of any two of the above values.

In some embodiments, 20≤A₂≤40. Optionally, 31≤A₂≤38. The ratio of the area of the (010) crystal plane of the second lithium iron manganese phosphate type material to the total area of the crystal planes of the second lithium iron manganese phosphate type material may be 20%, 22%, 25%, 28%, 30%, 31%, 32%, 35%, 38%, 40%, or a range consisting of any two of the above values.

During a process of spontaneous growth, crystals can develop into a polyhedral shape composed of planes with different orientations. The planes in the polyhedral shape become crystal planes. The crystal plane refers to a plane formed by any three lattice points in a crystal structure that are not on the same straight line, representing a direction of atomic planes in the crystal. A coordinate system (crystal axis system) is determined in the crystal. The crystal axis system has three crystal axes intersecting at a center of the crystal, namely an a-axis, a b-axis, and a c-axis. An exposed crystal plane refers to a crystal plane composed of atoms on a surface of the material, and can also be considered as a crystal plane in contact with an external environment. In the present application, a largest surface of the particle is used as an observation point, and a lattice spacing is measured at a high resolution through a transmission electron microscope (TEM). (200) and (002) crystal planes can be determined based on the lattice spacing. After the two crystal planes are confirmed, a crystal plane perpendicular to the two crystal planes is the (010) crystal plane.

Of course, the embodiment of the present application can also use an X-ray powder diffractometer to determine the crystal structure of the composite positive electrode active material, for example, using a Brucker D8A_A25 type X-ray diffractometer from Brucker AxS Company in Germany with CuKα rays as a radiation source, a ray wavelength scanning 2θ angle range is 10° to 90°, and a scanning rate is 4°/min.

During a charging and discharging process of the battery cell, lithium ions are transmitted one-dimensionally along the (010) crystal plane, i.e., a b-axis direction, and charge transfer mainly occurs on the (010) crystal plane. The main exposed crystal plane of the first lithium iron manganese phosphate type material of the present application is the (010) crystal plane. The first lithium iron manganese phosphate type material is used in combination with the second lithium iron manganese phosphate type material, which can reduce an internal resistance of the composite positive electrode active material, improve ionic powder conductivity and electronic powder conductivity of the composite positive electrode active material, reduce an intrinsic resistance, and improve a low temperature performance and a rate performance of the battery cell.

In some embodiments, a lattice parameter b-axis length of the first lithium iron manganese phosphate type material is b₁, with a unit of nm; and a lattice parameter b-axis length of the second lithium iron manganese phosphate type material is b₂, with a unit of nm, where b₁<b₂. Therefore, a lattice parameter b-axis of the first lithium iron manganese phosphate type material is relatively short, which can further shorten a lithium ion diffusion distance, thereby facilitating rapid transmission of the lithium ions, and improving the rate performance of the battery cell.

In some embodiments, b₁<100. Optionally, 10≤b₁≤80. Exemplarily, the lattice parameter b-axis length of the first lithium iron manganese phosphate type material may be 5 nm, 10 nm, 20 nm, 30 nm, 40 nm, 50 nm, 60 nm, 70 nm, 80 nm, 85 nm, or a range consisting of any two of the above values.

In some embodiments, b₂>100. Optionally, 200≤b₂≤800. Exemplarily, the lattice parameter b-axis length of the second lithium iron manganese phosphate type material may be 110nm, 120nm, 150nm, 180nm, 200nm, 250nm, 300nm, 400nm, 450nm, 500nm, 600nm, 700nm, 800nm, 850nm, or a range consisting of any two of the above values.

In some embodiments, an average voltage of the composite positive electrode active material is 3.55 V to 3.81 V, and the average voltage of the composite positive electrode active material is significantly improved. Exemplarily, the average voltage of the composite positive electrode active material may be 3.55 V, 3.60 V, 3.65 V, 3.70 V, 3.75 V, 3.80 V, 3.81 V, or a range consisting of any two of the above values.

In the embodiment of the present application, the average voltage of the composite positive electrode active material is a ratio of a discharge energy density to a specific capacity of the battery cell using the composite positive electrode active material, for example, the above value is obtained by a charging and discharging test at a rate of 0.1 C.

In some embodiments, the composite positive electrode active material has a first discharge voltage plateau U1 and a second discharge voltage plateau U2, and 4.0V≤U1<4.1V; and/or 3.4V≤U2≤3.6V. Exemplarily, U1 may be 4.0 V, 4.02 V, 4.05 V, 4.08 V, 4.09 V, 4.091 V, 4.095 V, 4.099 V, or a range consisting of any two of the above values. U2 may be 3.40 V, 3.42 V, 3.45 V, 3.48 V, 3.49 V, 3.50 V, 3.51 V, 3.52 V, 3.53 V, 3.55 V, 3.58 V, 3.60 V, or a range consisting of any two of the above values.

The second lithium iron manganese phosphate type material has two voltage plateaus, namely a manganese plateau of and an iron plateau, due to addition of a manganese element, and has a relatively high voltage plateau compared to materials such as lithium iron phosphate. Due to mixed use of the first lithium iron manganese phosphate type material and the second lithium iron manganese phosphate type material, the composite positive electrode active material has a significant voltage increase and has an ideal voltage plateau of 4.1 V close to the manganese plateau, which can significantly improve an energy density of the composite positive electrode active material.

In the embodiment of the present application, the discharge voltage plateau has a meaning well known in the art and can be detected using methods and devices well-known in the art. For example, a charging and discharging curve is obtained by a charging and discharging test at a rate of 0.1 C, and the discharge curve has a first discharge voltage plateau and a second discharge voltage plateau.

In some embodiments, a powder resistivity of the composite positive electrode active material is 1Ω·cm to 500 Ω·cm.Optionally, the powder resistivity is 5Ω·cm to 480 Ω·cm.Exemplarily, the powder resistivity of the composite positive electrode active material may be 1Ω·cm, 5Ω·cm, 10Ω·cm, 15Ω·cm, 16Ω·cm, 20Ω·cm, 28Ω·cm, 30Ω·cm, 40Ω·cm, 43Ω·cm, 50Ω·cm, 60Ω·cm, 68Ω·cm, 80Ω·cm, 100Ω·cm, 102Ω·cm, 120Ω·cm, 150Ω·cm, 160Ω·cm, 180Ω·cm, 200Ω·cm, 250Ω·cm, 280Ω·cm, 300Ω·cm, 313Ω·cm, 320Ω·cm, 350Ω·cm, 400Ω·cm, 450Ω·cm, 500Ω·cm, or a range consisting of any two of the above values.

In the embodiment of the present application, the powder resistivity of the composite positive electrode active material has a meaning well known in the art and can be measured using instruments and methods well known in the art, such as using a four-probe instrument.

In some embodiments, a powder compaction density of the composite positive electrode active material is 2.19 g/ml to 2.40 g/ml. Exemplarily, the powder compaction density of the composite positive electrode active material can be 2.19 g/ml, 2.20 g/ml, 2.22 g/ml, 2.25 g/ml, 2.30 g/ml, 2.35 g/ml, 2.38 g/ml, 2.40 g/ml, or a range consisting of any two of the above values. When the powder compaction density of the composite positive electrode active material is within the above range, it is beneficial to improve the energy density.

In some embodiments, an X-ray diffraction (XRD) pattern of the first lithium iron manganese phosphate type material has a characteristic peak I (020) and a characteristic peak I (200), where I (020)/I (200)>2.1.

In some embodiments, an XRD pattern of the second lithium iron manganese phosphate type material has a characteristic peak I (020) and a characteristic peak I (200), where I (020)/I (200)≤2.1.

In some embodiments, the first lithium iron manganese phosphate type material has the nanosheet structure, a thickness of the first lithium iron manganese phosphate type material is H, with a unit of nm, and 10≤H≤80. Exemplarily, the thickness of the first lithium iron manganese phosphate type material may be 10 nm, 20 nm, 30 nm, 40 nm, 50 nm, 60 nm, 70 nm, 80 nm, or a range consisting of any two of the above values.

When the thickness of the first lithium iron manganese phosphate type material is within the above range, it is beneficial for the first lithium iron manganese phosphate type material to be distributed between gaps between particles of the second lithium iron manganese phosphate type material to form a conductive network structure, which can improve of the composite positive electrode active material and reduce the intrinsic resistance of the composite positive electrode active material, thereby improving powder conductivity.

In the embodiment of the present application, the thickness of the material has a meaning well known in the art and can be tested using instruments and methods well known in the art; for example, a certain amount of the above-mentioned composite positive electrode active material is taken, and then the material is subjected to a TEM analysis test to obtain a TEM image, and then thicknesses of multiple (for example, more than 30) particles are measured on the TEM image, and an average value thereof is taken as an average thickness of the material.

In some embodiments, based on a total mass of the composite positive electrode active material, a mass percentage of the first lithium iron manganese phosphate type material is B₁, and a mass percentage of the second lithium iron manganese phosphate type material is B₂, where 1≤B₂/B₁≤19. When the mass percentages of the first lithium iron manganese phosphate type material and the second lithium iron manganese phosphate type material satisfy the above range, the discharge voltage plateau of the composite positive electrode active material can be significantly improved, thereby improving the energy density of the battery cell. Exemplarily, a ratio _{B2}/_{B1} of the mass percentage of the second lithium iron manganese phosphate type material to the mass percentage of the first lithium iron manganese phosphate type material may be 1, 2, 5, 6, 7, 8, 10, 12, 14, 15, 16, 17, 18, 19, or a range consisting of any two of the above values.

In some embodiments, 5≤B₁≤50; and optionally, 10≤B₁≤30. Exemplarily, the mass percentage B₁% of the first lithium iron manganese phosphate type material may be 5%, 10%, 15%, 20%, 25%, 30%, 35%, 40%, 45%, 50%, or a range consisting of any two of the above values.

In some embodiments, 50≤B₂≤95; and optionally, 70≤B₂≤90. Exemplarily, the mass percentage B₂% of the second lithium iron manganese phosphate type material may be 50%, 55%, 60%, 65%, 70%, 75%, 80%, 85%, 90%, 95%, or a range consisting of any two of the above values.

In some embodiments, a volumetric average particle size of the first lithium iron manganese phosphate type material is Dᵥ₅₀₋₁, with a unit of nm; a volumetric average particle size of the second lithium iron manganese phosphate type material is Dᵥ₅₀₋₂, with a unit of nm; 1≤Dᵥ₅₀₋₂/Dᵥ₅₀₋₁≤16; and optionally, 2≤Dᵥ₅₀₋₂/Dᵥ₅₀₋₁≤16. Exemplarily, Dᵥ₅₀₋₂/Dᵥ₅₀₋₁ may be 1, 1.2, 1.5, 2.0, 2.5, 3.0, 4.0, 5.0, 6.0, 8.0, 10.0, 11, 12, 15, 16, or a range consisting of any two of the above values.

The embodiment of the present application prepares the composite material by mixing two lithium iron manganese phosphate particles of different particle sizes, and improves a bulk density between the particles through a grading relationship between the particles, so that the composite material has a relatively high compaction density, and the energy density of the battery cell can also be improved.

The second lithium iron manganese phosphate type material is spherical and/or quasi-spherical particles, and has a relatively large particle size, with pores between the particles. The first lithium iron manganese phosphate type material with a relatively small particle size is filled in the pores of the second lithium iron manganese phosphate type material. It can be understood that the first lithium iron manganese phosphate type material is evenly distributed on a surface of the second lithium iron manganese phosphate type material. The first lithium iron manganese phosphate type material is internally interconnected to form a three-dimensional conductive network structure, which reduces the intrinsic resistance of the composite positive electrode active material and improves the overall ionic powder conductivity and electronic powder conductivity of the composite positive electrode active material, thereby improving the low temperature performance and the rate performance of the battery cell.

In some embodiments, 50≤Dᵥ₅₀₋₁≤300. Exemplarily, the volumetric average particle size of the first lithium iron manganese phosphate type material may be 50nm, 80nm, 100nm, 150nm, 180nm, 200nm, 250nm, 300nm, or a range consisting of any two of the above values.

In some embodiments, 200≤Dᵥ₅₀₋₂≤800. Exemplarily, the volumetric average particle size of the second lithium iron manganese phosphate type material may be 200nm, 230nm, 250nm, 300nm, 400nm, 450nm, 500nm, 550nm, 600nm, 650nm, 700nm, 800nm, or a range consisting of any two of the above values.

In the present application, the volumetric average particle size Dv50 of the material has a meaning well known in the art, which indicates that a particle size corresponding to when a cumulative volume distribution percentage of the material reaches 50% can be tested using instruments and methods well known in the art. For example, testing can be conveniently performed by a laser particle size analyzer, such as the Mastersizer 2000E from Malvern Instruments Ltd. in the UK, with reference to a GB/T 19077-2016 particle size distribution laser diffraction method.

In some embodiments, a specific surface area of the first lithium iron manganese phosphate type material is S₁, with a unit ofm²/g; a specific surface area of the second lithium iron manganese phosphate type material is S₂, with a unit ofm²/g; and 0.4≤S₂/S₁<1.0. Exemplarily, S₂/S₁ may be 0.4, 0.6, 0.7, 0.8, 0.9, or a range consisting of any two of the above values.

When the specific surface area of the first lithium iron manganese phosphate type material and the specific surface area of the second lithium iron manganese phosphate type material are within the above range, it is more conducive for the first lithium iron manganese phosphate type material to form the interconnected conductive network structure, thereby improving the electronic powder conductivity and the electronic powder conductivity of the composite positive electrode active material.

In some embodiments, 20≤S₁≤50. Optionally, 22≤S₁≤35. Exemplarily, the specific surface area of the first lithium iron manganese phosphate type material may be 20m²/g, 25m²/g, 30m²/g, 40m²/g, 50m²/g, or a range consisting of any two of the above values.

In some embodiments, 8≤S₂≤20. Exemplarily, the specific surface area of the second lithium iron manganese phosphate type material may be 8m²/g, 10m²/g, 15m²/g, 18m²/g, 20m²/g, or a range consisting of any two of the above values.

In the present application, the specific surface area of the material has a meaning well known in the art and can be tested using instruments and methods well known in the art, for example, it can be tested using a nitrogen adsorption specific surface area analysis test method and calculated using a Brunauer Emmett Teller (BET) method, where a nitrogen adsorption specific surface area analysis test can be performed using a NOVA 2000e type specific surface area and pore size analyzer from Quantachrome Company of the US.

In some embodiments, the first lithium iron manganese phosphate type material and the second lithium iron manganese phosphate type material each independently include a compound having a molecular formula of LiFe₍₁₋ₓ₎MnₓPO₄ and a modified compound thereof, where 0.5≤x<1. In the present application, modification refers to doping modification or coating modification on the material.

Exemplarily, the first lithium iron manganese phosphate type material includes one or more of LiFe_{0.5}Mn_{0.5}PO₄, LiFe_{0.4}Mn_{0.6}PO₄, LiFe_{0.3}Mn_{0.7}PO₄, and LiFe_{0.2}Mn_{0.8}PO₄.

Exemplarily, the second lithium iron manganese phosphate type material includes one or more of LiFe_{0.5}Mn_{0.5}PO₄, LiFe_{0.4}Mn_{0.6}PO₄, LiFe_{0.3}Mn_{0.7}PO₄, and LiFe_{0.2}Mn_{0.8}PO₄.

### Battery cell

In a second aspect, an embodiment of the present application further provides a battery cell.

The battery cell is also referred to as a rechargeable battery or a storage battery, and refers to a battery that can be used continually by activating an active material in a charging mode after the battery is discharged. Typically, the battery cell includes an electrode assembly and an electrolyte solution. The electrode assembly includes a positive electrode plate, a negative electrode plate, and a separator. The separator is arranged between the positive electrode plate and the negative electrode plate, and its main function is to prevent a positive electrode and a negative electrode from short-circuiting, while allowing active ions such as lithium ions to pass through.

The battery cell of the embodiment of the present application includes the positive electrode plate which includes a positive electrode current collector and a positive electrode film layer arranged on at least one surface of the positive electrode current collector, and the positive electrode film layer includes a composite positive electrode active material of the first aspect of the embodiment of the present application. Therefore, an energy density of the battery cell of the present application can be improved.

### [Positive electrode plate]

In some embodiments, the positive electrode current collector has two opposite surfaces in a direction of its own thickness, and the positive electrode film layer is arranged on either or both of the two opposite surfaces of the positive electrode current collector.

In some embodiments, the positive electrode film layer further optionally includes a positive electrode conductive agent. In the present application, a type of the positive electrode conductive agent is not specifically limited, as an example, the positive electrode conductive agent includes at least one of superconducting carbon, conductive graphite, acetylene black, carbon black, Ketjen black, carbon dots, carbon nanotubes, graphene, and carbon nanofibers. In some embodiments, based on a total weight of the positive electrode film layer, a mass percentage of the positive electrode conductive agent is ≤5 wt%.

In some embodiments, the positive electrode film layer further optionally includes a positive electrode binder. In the present application, a type of the positive electrode binder is not specifically limited, as an example, the positive electrode binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on the total weight of the positive electrode film layer, a mass percentage of the positive electrode binder is ≤5 wt%.

In some embodiments, the positive electrode current collector may be a metal foil or a composite current collector. As an example of the metal foil, an aluminum foil can be used. The composite current collector may include a high molecular material substrate layer and a metal material layer formed on at least one surface of the high molecular material substrate layer. As an example, the metal material may include at least one of aluminum, an aluminum alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The positive electrode film layer is usually formed by coating the positive electrode current collector with a positive electrode slurry, followed by drying and cold pressing. The positive electrode slurry is generally formed by dispersing the composite positive electrode active material, the optional conductive agent, the optional binder, and any other components in a solvent and uniformly stirring a mixture. The solvent may be N-methyl pyrrolidone (NMP), but is not limited thereto. In some embodiments, the first lithium iron manganese phosphate type material and the second lithium iron manganese phosphate type material may be mixed in proportion in advance, and then the optional conductive agent, the optional binder, and any other components may be added, dispersed in the solvent and stirred evenly.

### [Negative electrode plate]

The battery cell also includes a negative electrode plate.

In some embodiments, the negative electrode plate includes a negative electrode current collector and a negative electrode film layer arranged on at least one surface of the negative electrode current collector and including a negative electrode active material. For example, the negative electrode current collector has two opposite surfaces in a direction of its own thickness, and the negative electrode film layer is arranged on either or both of the two opposite surfaces of the negative electrode current collector.

A negative electrode active material, well-known in the art, for a battery cell may be used as the negative electrode active material. As an example, the negative electrode active material may include, but not limited to, at least one of natural graphite, artificial graphite, soft carbon, hard carbon, a silicon-based material, a tin-based material, and lithium titanate. The silicon-based material may include at least one of elemental silicon, a silicon oxide, a silicon-carbon composite, a silicon-nitrogen composite, and a silicon alloy. The tin-based material may include at least one of elemental tin, a tin oxide, and a tin alloy
In some embodiments, the negative electrode film layer further optionally includes a negative electrode conductive agent. In the present application, a type of the negative electrode conductive agent is not specifically limited, as an example, the negative electrode conductive agent may include at least one of superconducting carbon, conductive graphite, acetylene black, carbon black, Ketjen black, carbon dots, carbon nanotubes, graphene, and carbon nanofibers. **In** some embodiments, based on a total weight of the negative electrode film layer, a mass percentage of the negative electrode conductive agent is ≤5 wt%.

In some embodiments, the negative electrode film layer further optionally includes a negative electrode binder. In the present application, a type of the negative electrode binder is not specifically limited, as an example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on the total weight of the negative electrode film layer, a mass percentage of the negative electrode binder is ≤5 wt%.

In some embodiments, the negative electrode film layer further optionally includes other auxiliaries. As an example, the other auxiliaries may include thickeners, such as, carboxymethyl cellulose sodium (CMC), a PTC thermistor material, and the like. In some embodiments, based on the total weight of the negative electrode film layer, a mass percentage of the other auxiliaries is ≤2 wt%.

In some embodiments, the negative electrode current collector may be a metal foil or a composite current collector. As an example of the metal foil, a copper foil can be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative electrode film layer is usually formed by coating the negative electrode current collector with a negative electrode slurry, followed by drying and cold pressing. The negative electrode slurry is generally formed by dispersing the negative electrode active material, the optional conductive agent, the optional binder, and the other optional auxiliaries in a solvent and uniformly stirring a mixture. The solvent may be N-methyl pyrrolidone (NMP) or deionized water, but not limited thereto.

The negative electrode plate does not exclude other additional functional layers other than the negative electrode film layer. For example, in some embodiments, the negative electrode plate in the present application further includes a conductive primer coating (e.g., composed of a conductive agent and a binder) sandwiched between the negative electrode current collector and the negative electrode film layer and arranged on a surface of the negative electrode current collector. In some other embodiments, the negative electrode plate of the present application further includes a protective layer covering a surface of the negative electrode film layer.

### [Electrolyte solution]

The battery cell further includes an electrolyte solution.

During a charging and discharging process of the battery cell, active ions are intercalated and deintercalated back and forth between the positive electrode plate and the negative electrode plate, and the electrolyte solution serves to conduct the active ions between the positive electrode plate and the negative electrode plate. The present application has no specific limitation on a type of the electrolyte solution, which can be selected according to actual requirements.

The electrolyte solution includes an electrolyte salt and a solvent. Types of the electrolyte salt and the solvent are not specifically limited, and may be selected according to actual requirements.

As an example, the electrolyte salt may include, but is not limited to at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

As an example, the solvent may include, but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethyl sulfonyl ethane (ESE).

In some embodiments, an additive may also be optionally included in the electrolyte solution. For example, the additive may include a negative electrode film-forming additive, or may include a positive electrode film-forming additive, and may further include an additive capable of improving certain performances of a battery, such as an additive for improving an overcharging performance of the battery, an additive for improving a high temperature performance of the battery, an additive for improving a low temperature performance of the battery, etc.

### [Separator]

The battery cell of the present application further includes a separator.

In some embodiments, the battery cell further includes the separator. A type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, materials in all layers may be same or different, which is not particularly limited.

In some embodiments, the positive electrode plate, the separator, and the negative electrode plate may be made into an electrode assembly by a winding process and/or a stacking process.

In some embodiments, the battery cell may include an outer package. The outer package can be used to encapsulate the above-mentioned electrode assembly and electrolyte solution.

In some embodiments, the outer package of the battery cell may be a hard shell, such as a hard plastic shell, an aluminum shell, and a steel shell. The outer package of the battery cell may also be a soft package, such as a bag-type soft package. A material of the soft package can be plastic, such as at least one of polypropylene (PP), polybutylene terephthalate (PBT), and polybutylene succinate (PBS).

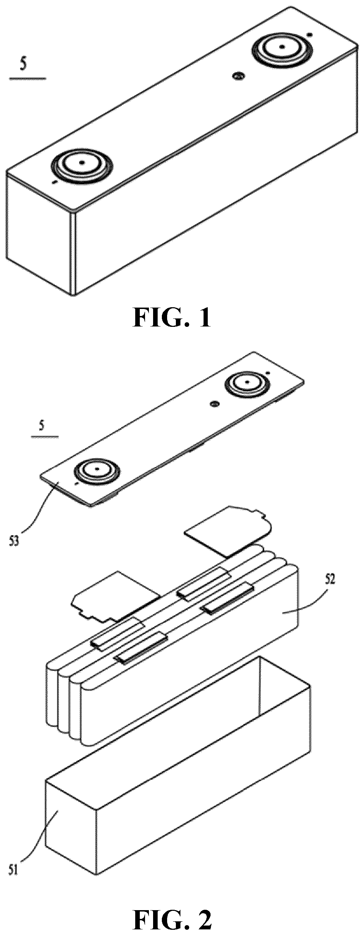

A shape of the battery cell is not particularly limited in the present application, and may be a cylinder shape, a square shape, or any other shape. For example, FIG. 1 shows a battery cell 5 in a square structure as an example.

In some embodiments, as shown in FIG. 2, the outer package may include a housing 51 and a cover plate 53. The housing 51 may include a bottom plate and side plates connected to the bottom plate, which define an accommodating cavity. The housing 51 has an opening in communication with the accommodating cavity, and the cover plate 53 is configured to cover the opening to close the accommodating cavity. The positive electrode plate, the negative electrode plate, and the separator may form an electrode assembly 52 by a winding process and/or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. **In** some embodiments, the positive electrode plate, the separator, the negative electrode plate, and the electrolyte solution may be assembled to form the battery cell. As an example, the positive electrode plate, the separator, and the negative electrode plate may form the electrode assembly by a winding process and/or a stacking process; the electrode assembly is placed in the outer package; the electrolyte solution is poured in after drying; and the battery cell is obtained through processes such as vacuum encapsulation, standing, formation, and shaping.

In some embodiments of the present application, the battery cell according to the present application can be assembled into a battery module, a number of battery cells included in the battery module can be multiple, and a specific number can be adjusted according to the application and capacity of the battery module.

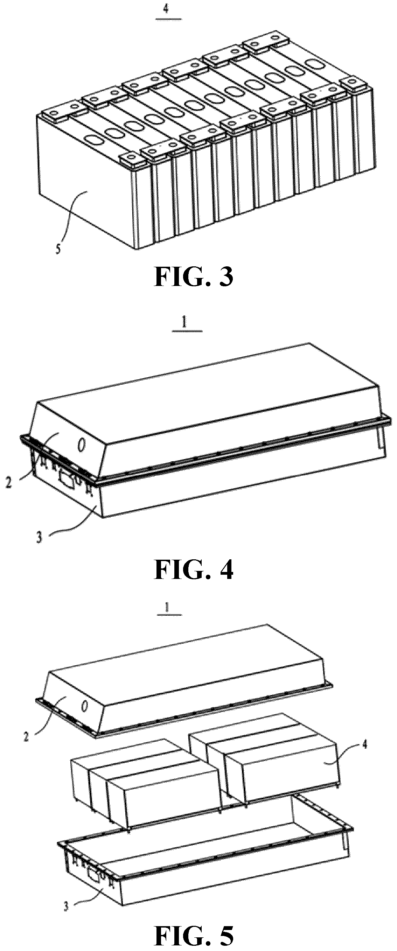

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the above-mentioned battery module may further be assembled into a battery pack, and a number of the battery modules included in the battery pack can be adjusted according to the application and capacity of the battery pack.

FIG. 4 and FIG. 5 are schematic views of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, where the upper box body 2 is configured to cover the lower box body 3 to form an enclosed space for accommodating the battery modules 4. The plurality of battery modules 4 may be arranged in the battery box in any manner.

In the embodiment of the present application, the battery may include one or more battery cells. In the case where the battery includes a plurality of battery cells, the battery may include a battery module or a battery pack.

### Electrical apparatus

An embodiment of the present application further provides an electrical apparatus, and the electrical apparatus includes at least one of the battery cell, the battery module, or the battery pack of the present application. The battery cell, the battery module, or the battery pack may be used as a power source for the electrical apparatus, and may also be used as an energy storage unit for the electrical apparatus. The electrical apparatus may be, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

For the electrical apparatus, the battery cell, the battery module, or the battery pack can be selected according to use requirements thereof.

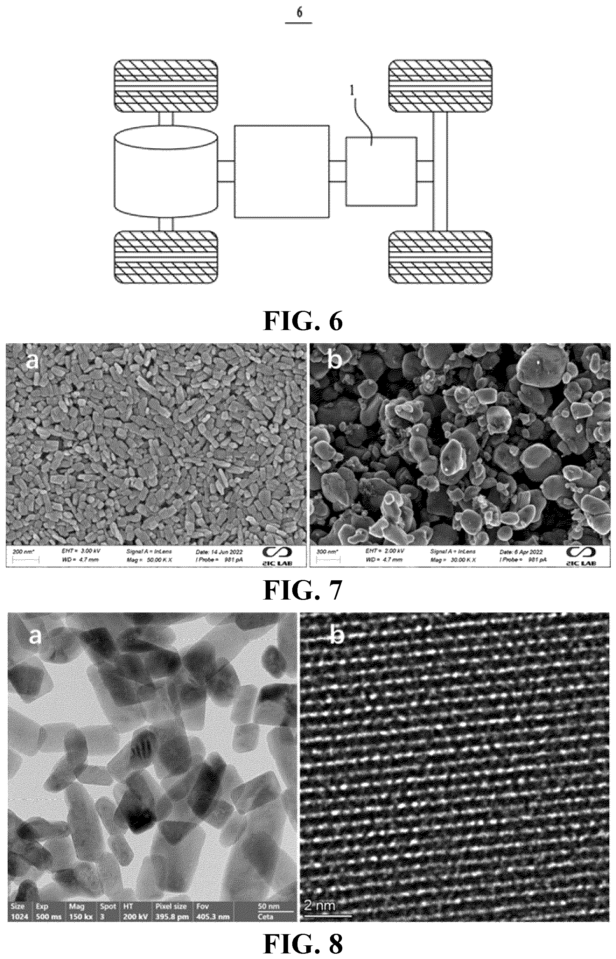

FIG. 6 is a schematic view of an electrical apparatus as an example. The electrical apparatus is an all-electric vehicle, a hybrid electric vehicle, a plug-in hybrid electric vehicle, or the like. In order to meet the requirements of the electrical apparatus for high power and high energy density, a battery pack or a battery module may be used.

As another example, the electrical apparatus may be a mobile phone, a tablet personal computer, a laptop, etc. The electrical apparatus is generally required to be thin and light, and may use a battery cell as a power source.

### Embodiment

The following embodiments more specifically describe the contents disclosed in the present application. These embodiments are intended for illustrative purposes only, because various modifications and changes made within the scope of the contents disclosed in the present application will be apparent to those skilled in the art. Unless otherwise stated, all parts, percentages, and ratios reported in the following embodiments are based on the mass, all reagents used in the embodiments are either commercially available or synthesized according to conventional methods, and can be directly used without further processing, and all the instruments used in the embodiments are commercially available.

### Embodiment 1

### Preparation of a lithium ion battery

### 1. Preparation of a positive electrode plate

An aluminum foil with a thickness of 12 µm is used as a positive electrode current collector.

A positive electrode active material, a carbon black conductive agent, and a polyvinylidene fluoride (PVDF) binder are fully stirred and mixed in an appropriate amount of NMP solvent in a weight ratio of 97.5: 1.4: 1.1 to form a uniform positive electrode slurry; and a surface of the positive electrode current collector aluminum foil is uniformly coated with the positive electrode slurry, and the positive electrode plate is obtained after drying and cold pressing.

### 2. Preparation of a negative electrode plate

A copper foil with a thickness of 8 µm is used as a negative electrode current collector.

A graphite negative electrode active material, a styrene butadiene rubber (SBR) binder, a carboxymethyl cellulose sodium (CMC-Na) thickener, and a carbon black (Super P) conductive agent are sufficiently stirred and mixed in an appropriate amount of deionized water solvent in a weight ratio of 96.2: 1.8: 1.2: 0.8 to form a uniform negative electrode slurry; and a surface of the negative electrode current collector copper foil is uniformly coated with the negative electrode slurry, and the negative electrode plate is obtained after drying and cold pressing.

### 3. Separator

A porous polyethylene (PE) film is used as a separator.

### 4. Preparation of an electrolyte solution

In an environment with a water content of less than 10 ppm, non-aqueous organic solvents ethylene carbonate (EC) and diethyl carbonate (DMC) are mixed in a volume ratio of 1: 1 to obtain a solvent of an electrolyte solution, and then lithium salt lithium hexafluorophosphate and the mixed solvent are mixed to prepare an electrolyte solution with a lithium salt concentration of 1 mol/L.

### (5) Preparation of a lithium ion battery

The positive electrode plate, the separator, and the negative electrode plate mentioned above are stacked in order, so that the separator is positioned between the positive electrode plate and the negative electrode plate to play a separating role, and then winding is performed so that an electrode assembly can be obtained; the electrode assembly is put into an outer package shell, and after drying, the electrolyte solution is injected thereto; and the lithium ion battery is obtained through processes such as vacuum encapsulation, standing, formation, and shaping.

### Comparative Example 1

Comparative Example 1 was prepared by a method similar to that of Embodiment 1. The difference from Embodiment 1 is that a positive electrode active material of Comparative Example 1 is LiFe_{0.4}Mn_{0.6}PO₄, which is spherical particles.

### Comparative Example 2

Comparative Example 1 was prepared by a method similar to that of Embodiment 1. The difference from Embodiment 1 is that a positive electrode active material of Comparative Example 2 uses nano-spherical LiFe_{0.4}Mn_{0.6}PO₄ and spherical LiFe_{0.4}Mn_{0.6}PO₄, A₁=A₂, and volumetric average particle sizes of the two materials are different.

### Embodiment 2-1 to Embodiment 2-4

Comparative Example 1 was prepared by a method similar to that of Embodiment 1. The difference from Embodiment 1 is that in Embodiment 2-1 to Embodiment 2-4, a ratio of a mass percentage of a first lithium iron manganese phosphate type material to a mass percentage of a second lithium iron manganese phosphate type material was adjusted.

### Embodiment 3-1 to Embodiment 3-6

Comparative Example 1 was prepared by a method similar to that of Embodiment 1. The difference from Embodiment 1 is that in Embodiment 3-1 to Embodiment 3-6, a ratio of a volumetric average particle size of the first lithium iron manganese phosphate type material to a volumetric average particle size of the second lithium iron manganese phosphate type material was adjusted.

### Embodiment 4-1 and Embodiment 4-2

Comparative Example 1 was prepared by a method similar to that of Embodiment 1. The difference from Embodiment 1 is that in Embodiment 4-1 and Embodiment 4-2, molecular formulas of a first lithium iron manganese phosphate type material and a second lithium iron manganese phosphate type material were adjusted.

**Data of the embodiments and the comparative examples are as shown in Table 1.**

### Tested parts

### 1. Powder compaction density of the composite positive electrode active material

Take a certain amount of the above composite positive electrode active material sample, add the same into a mold with a bottom area of 1.327cm² of a UTM7305 type electronic pressure testing machine, perform pressurization to 2000 kg (equivalent to 20,000 N), maintain the pressure for 30 s, then release the pressure, maintain the process for 10 s, and then record and calculate the powder compaction density of the composite positive electrode active material under an acting force of 20,000 N. A test standard is based on GB/T24533-2009.

### 2. Average voltage of the battery cell

A button-type half-cell is composed of a positive electrode plate per unit area and a lithium metal plate per unit area, where an electrolyte solution composition adopts an electrolyte solution composition of the embodiment, full charging is performed at a rate of 0.1 C, a charging and discharging test is performed at the rate of 0.1 C, and a discharge energy density/specific capacity is the average voltage.

### Test results

The test results are as shown in Table 1.

**Table 1**

| Item | Composite positive electrode active material | | | | | | | | | | | | | | | | Average voltage of the battery cell (V) |
|---|---|---|---|---|---|---|---|---|---|---|---|---|---|---|---|---|---|
| | First lithium iron manganese phosphate type material | | | | | | Second lithium iron manganese phosphate type material | | | | | | B₂/B₁ | Dᵥ₅₀₋₂/ Dᵥ₅₀₋₁ | Powder resistivity (Ω·cm) | Powder compaction density (g/ml) | |
| | Molecular formula | Ratio A₁% of an area of a (010) crystal plane | b-axis length b₁ (nm) | Mass percentage B₁% | Volumetric average particle size Dᵥ₅₀₋₁ (nm) | Specific surface area S₁ (m²/g) | Molecular formula | Ratio A_{2%} of an area of a (010) crystal plane | b-axis length b₂ (nm) | Mass percentage B₂% | Volumetric average particle size Dᵥ₅₀₋₂ (nm) | Specific surface area S₂ (m²/g) | | | | | |
| Comparative example 1 | Not given | Not given | Not given | Not given | Not given | Not given | 64 | 35 | 300 | 100 | 300 | 14.5 | Not given | Not given | 815 | 2.35 | 3.52 |
| Comparative example 2 | 64 | 35 | 80 | 20 | 80 | 26 | 64 | 35 | 300 | 80 | 300 | 14.5 | 4 | 3.75 | 374 | 2.32 | 3.54 |
| Embodiment 1 | 64 | 65 | 20 | 20 | 80 | 34 | 64 | 35 | 300 | 80 | 300 | 14.5 | 4 | 5 | 28 | 2.34 | 3.68 |
| Embodiment 2-1 | 64 | 65 | 20 | 5 | 80 | 34 | 64 | 35 | 300 | 95 | 300 | 14.5 | 19 | 5 | 313 | 2.35 | 3.61 |
| Embodiment 2-2 | 64 | 65 | 20 | 10 | 80 | 34 | 64 | 35 | 300 | 90 | 300 | 14.5 | 9 | 5 | 102 | 2.34 | 3.64 |
| Embodiment 2-3 | 64 | 65 | 20 | 30 | 80 | 34 | 64 | 35 | 300 | 70 | 300 | 14.5 | 2.3 | 5 | 16 | 2.31 | 3.70 |
| Embodiment 2-4 | 64 | 65 | 20 | 50 | 80 | 34 | 64 | 35 | 300 | 50 | 300 | 14.5 | 1 | 5 | 5 | 2.26 | 3.72 |
| Embodiment 3-1 | 64 | 60 | 20 | 20 | 100 | 29 | 64 | 35 | 300 | 80 | 300 | 14.5 | 4 | 3 | 43 | 2.35 | 3.67 |
| Embodiment 3-2 | 64 | 74 | 10 | 20 | 50 | 46 | 64 | 35 | 300 | 80 | 300 | 14.5 | 4 | 6 | 5 | 2.34 | 3.66 |
| Embodiment 3-3 | 64 | 40 | 80 | 20 | 300 | 14 | 64 | 35 | 300 | 80 | 300 | 14.5 | 4 | 1 | 68 | 2.21 | 3.60 |
| Embodiment 3-4 | 64 | 45 | 40 | 20 | 150 | 24 | 64 | 35 | 300 | 80 | 300 | 14.5 | 4 | 2 | 15 | 2.25 | 3.64 |
| Embodiment 3-5 | 64 | 74 | 10 | 20 | 50 | 46 | 64 | 31 | 800 | 80 | 500 | 6.8 | 4 | 16 | 480 | 2.40 | 3.58 |
| Embodiment 3-6 | 64 | 74 | 10 | 20 | 50 | 46 | 64 | 38 | 200 | 80 | 200 | 18.7 | 4 | 4 | 12 | 2.19 | 3.69 |
| Embodiment 4-1 | 73 | 65 | 20 | 20 | 80 | 34 | 73 | 35 | 300 | 80 | 300 | 14.5 | 4 | 3.75 | 169 | 2.34 | 3.81 |
| Embodiment 4-2 | 55 | 65 | 20 | 20 | 80 | 34 | 55 | 35 | 300 | 80 | 300 | 14.5 | 4 | 3.75 | 136 | 2.35 | 3.55 |

In Table 1, molecular formula 64 represents LiFe_{0.4}Mn_{0.6}PO₄; molecular formula 73 represents LiFe_{0.3}Mn_{0.7}PO₄; and molecular formula 55 represents LiFe_{0.5}Mn_{0.5}PO₄.

As can be seen from Table 1, Comparative Example 1 uses a spherical lithium iron manganese phosphate material as the positive electrode active material. Compared with Comparative Example 1, in Comparative Example 2, a smaller-particle lithium iron manganese phosphate material of a nano-spherical structure is additionally added, which can improve the average voltage to a certain extent, but an improvement effect is very small.

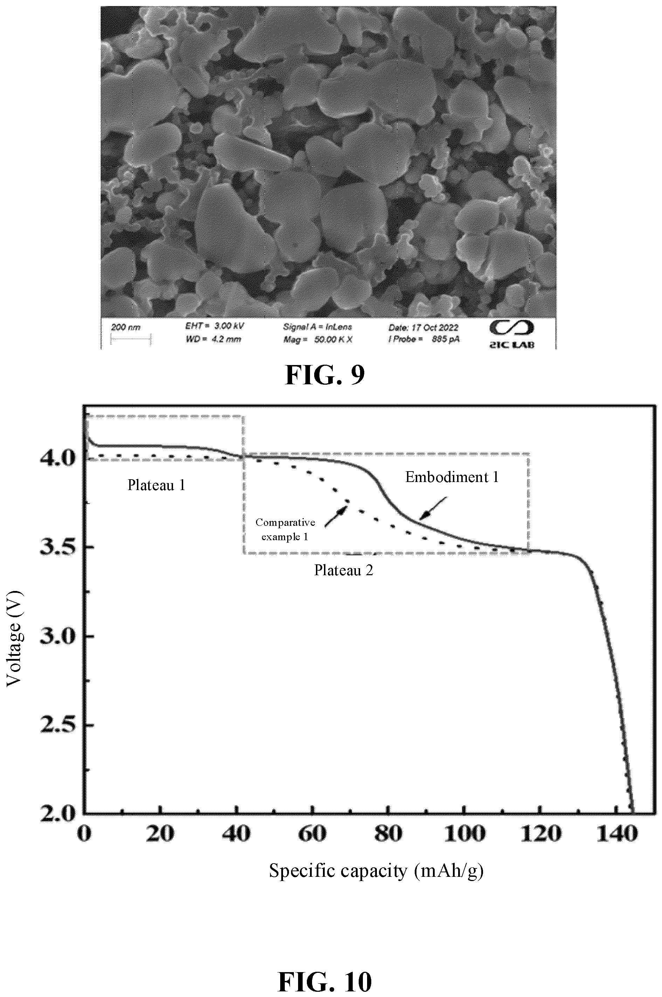

As can be seen from FIG. 7a to FIG. 9, the first lithium iron manganese phosphate type material in Embodiment 1 has a nanosheet structure, and the second lithium iron manganese phosphate type material has a quasi-spherical structure. The composite positive electrode active material formed by mixing the two materials is in a mixed form of the two materials. As can be seen from FIG. 10, both a discharge plateau 1 (corresponding to a first discharge voltage plateau) and a discharge plateau 2 (corresponding to a second discharge voltage plateau) of Embodiment 1 are significantly improved.

Thus, it can be seen that in the embodiment of the present application, by adding the lithium iron manganese phosphate material with the (010) crystal plane exposed, the capacity of this type of material is close to the theoretical capacity, which can significantly improve the average discharge voltage of lithium iron manganese phosphate.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A composite positive electrode active material, comprising:
a first lithium iron manganese phosphate type material having a nanosheet structure, a ratio of an area of a (010) crystal plane of the first lithium iron manganese phosphate type material to a total area of crystal planes of the first lithium iron manganese phosphate type material being A₁%; and
a second lithium iron manganese phosphate type material having a spherical and/or quasi-spherical structure, a ratio of an area of a (010) crystal plane of the second lithium iron manganese phosphate type material to a total area of crystal planes of the second lithium iron manganese phosphate type material being A₂%;
wherein the composite positive electrode active material satisfies: A₁>A₂.

2. The composite positive electrode active material according to claim 1, wherein
a lattice parameter b-axis length of the first lithium iron manganese phosphate type material is b₁, with a unit of nm; and
a lattice parameter b-axis length of the second lithium iron manganese phosphate type material is b₂, with a unit of nm;
wherein b₁<b₂;
optionally,
b₁<100; further optionally, 10≤b₁≤80; and/or
b₂>100; and further optionally, 200≤b₂≤800.

3. The composite positive electrode active material according to claim 1 or 2, wherein an average voltage of the composite positive electrode active material is 3.55 V to 3.81 V;
and/or
the composite positive electrode active material has a first discharge voltage plateau U1 and a second discharge voltage plateau U2, and 4.0V≤U1<4.1V; and/or 3.4V≤U2≤3.6V.

4. The composite positive electrode active material according to any one of claims 1 to 3, wherein
a powder resistivity of the composite positive electrode active material is 1Ω·cm to 500 Ω·cm; and/or
a powder compaction density of the composite positive electrode active material is 2.19 g/ml to 2.40 g/ml.

5. The composite positive electrode active material according to any one of claims 1 to 4, wherein an X-ray diffraction (XRD) pattern of the first lithium iron manganese phosphate type material has a characteristic peak I (020) and a characteristic peak I (200), and I (020)/I (200)>2.1; and/or
an XRD pattern of the second lithium iron manganese phosphate type material has a characteristic peak I (020) and a characteristic peak I (200), and I (020)/I (200)≤2.1.

6. The composite positive electrode active material according to any one of claims 1 to 5, wherein
a thickness of the first lithium iron manganese phosphate type material is H, with a unit of nm, and 10≤H≤80.

7. The composite positive electrode active material according to any one of claims 1 to 6, wherein
based on a total mass of the composite positive electrode active material, a mass percentage of the first lithium iron manganese phosphate type material is B₁%, a mass percentage of the second lithium iron manganese phosphate type material is B₂%, and 1≤B₂/B₁≤19.

8. The composite positive electrode active material according to any one of claims 1 to 7, wherein
a volumetric average particle size of the first lithium iron manganese phosphate type material is Dᵥ₅₀₋₁, with a unit of nm; and
a volumetric average particle size of the second lithium iron manganese phosphate type material is Dᵥ₅₀₋₂, with a unit of nm;
wherein 1≤Dᵥ₅₀₋₂/Dᵥ₅₀₋₁≤16; optionally, 2≤Dᵥ₅₀₋₂/Dᵥ₅₀₋₁≤16;
further optionally, 50≤Dᵥ₅₀₋₁≤300; and/or 200≤Dᵥ₅₀₋₂≤800.

9. The composite positive electrode active material according to any one of claims 1 to 8, wherein
a specific surface area of the first lithium iron manganese phosphate type material is S₁, with a unit of m²/g; and
a specific surface area of the second lithium iron manganese phosphate type material is S₂, with a unit of m²/g;
wherein 0.4≤S₂/S₁<1.0;
optionally, 20≤S₁≤50; and/or 8≤S₂≤20.

10. The composite positive electrode active material according to any one of claims 1 to 9, wherein
the first lithium iron manganese phosphate type material and the second lithium iron manganese phosphate type material each independently comprise a compound having a molecular formula of LiFe₍₁₋ₓ₎MnₓPO₄ and a modified compound thereof, wherein 0.5≤x<1.

11. A battery cell, comprising a positive electrode plate, wherein the positive electrode plate comprises the composite positive electrode active material according to any one of claims 1 to 10.

12. A battery, comprising the battery cell according to claim 11.

13. An electrical apparatus, comprising the battery according to claim 12.
